# EUROPÄISCHE PATENTSCHRIFT

(11) **EP 2 960 564 B1**
(45) Veröffentlichungstag und Bekanntmachung des Hinweises auf die Patenterteilung: **24.07.2019**
(21) Anmeldenummer: 15172763.3
(22) Anmeldetag: 18.06.2015
(51) Int. Cl.: F16L 9/06, F16L 11/15, F16L 9/17

(54) **WELLROHR FÜR EINE TRINKWASSERINSTALLATION**
CORRUGATED TUBE FOR A DRINKING WATER INSTALLATION
TUBE ONDULÉ POUR UN SYSTÈME D'INSTALLATION D'EAU POTABLE

(30) Priorität: 27.06.2014 DE 102014212481
(43) Veröffentlichungstag der Anmeldung: 30.12.2015
(73) Patentinhaber: Witzenmann GmbH, 75175 Pforzheim (DE)
(72) Erfinder: Klein, Tobias, 76137 Karlsruhe (DE); Gehring, Matthias, 75334 Straubenhardt (DE); Paulig, Gerd, 75248 Ölbronn-Dürrn (DE); Maes, Michael, 75181 Pforzheim (DE)
(74) Vertreter: Lemcke, Brommer & Partner Patentanwälte Partnerschaft mbB

(56) Entgegenhaltungen:
- DE-A1- 3 635 515
- DE-U1-202005 013 700
- GB-A- 1 045 795
- US-A1- 2002 003 041

## Beschreibung

Die vorliegende Erfindung betrifft eine Verwendung gemäß dem Oberbegriff des Anspruchs 1 und ein trinkwassergeeigneter Pufferspeicher gemäß dem Oberbegriff des Anspruchs 6.

Eine solche Verwendung nach dem Oberbegriff des Anspruchs 1 und ein solcher Pufferspeicher nach dem Oberbegriff des Anspruchs 6 sind aus der DE 20 2005 013 700 U1 bekannt. Wellrohre, die häufig auch als Wellschläuche bezeichnet werden, werden aus nahtlosen oder längsgeschweißten, dünnwandigen Rohren hergestellt, in die durch Spezialwerkzeuge mechanisch oder hydraulisch Wellen geformt werden. Aufgrund ihrer Dichtheit werden Wellschläuche zum Leiten von Gasen oder Flüssigkeiten unter Druck oder als Vakuumleitungen eingesetzt. Eine Ringwellung weist eine Vielzahl paralleler Wellen gleichen Abstandes auf, deren Hauptachse senkrecht zur Rohrachse steht.

Wellrohre aus Edelstahl werden unter anderem auch in Trinkwasserinstallationen eingesetzt, insbesondere bei Anwendungen zur Wärmeübertragung bzw. Wärmeaustausch, wie etwa in Pufferspeichern. Die gewellte Struktur sorgt dabei für eine große Oberfläche des Wellrohrs und damit für einen guten Wärmeaustausch an der Rohrwandung.

Die Druckschrift DE 3635515 zeigt ein wärmeisolierendes Leitungsrohr aus zwei konzentrischen, wendelgewellten Wellrohren und einer dazwischen befindlichen Wärmeisolationsschicht aus Polyurethan. Für das Innenrohr werden Innendurchmesser von 30 mm und Außendurchmesser von 34 mm angegeben.

Aus der Druckschrift US 2002/0003041 sind wendelgewellte Wellrohre für Trinkwasserinstallationen bekannt.

Um marktfähig zu sein und entsprechende Zulassungen für Trinkwasserinstallationen zu erhalten, müssen Wellrohre bestimmte technische Anforderungen und Prüfnormen erfüllen. Hervorzuheben ist hier insbesondere das kürzlich erlassene Regelwerk W/TPW 119/1 von April 2012 mit dem Titel "Bau und Prüfung von Wellrohrverbindungen für Wasserinstallationen bis PN 10 und Temperaturen bis 95°C" der technischen Prüfstelle Wasser (TPW) des Schweizerischen Vereins des Gas- und Wasserfaches (SVGW), sowie vergleichbare Regelwerke des Deutschen Vereins des Gas- und Wasserfaches (DVGW).

Um nach dem genannten Regelwerk eine entsprechende Zulassung zu erhalten, müssen verschiedene Prüfungen durchlaufen werden. Hierzu gehört einerseits eine Prüfung auf Biegefestigkeit, bei der das Wellrohr insgesamt fünf Mal um jeweils ± 180° um einen Biegeradius gebogen wird, der dem 1,5-fachen des Wellrohraußendurchmessers entspricht, und danach weder Risse noch Undichtigkeiten aufweisen darf. Andererseits muss eine Prüfung auf Druckstoßfestigkeit durchlaufen werden, bei der das Wellrohr insgesamt 10.000 Mal mit einem Druckstoß von 25 bar Überdruck beaufschlagt wird, ohne dass Undichtigkeiten auftreten dürfen. Die Kombination dieser beiden Prüfungen stellt vor allem für Wellrohre mit größerem Durchmesser eine sehr hohe technische Hürde dar. Die derzeit am Markt befindlichen Wellrohre der Nennweite DN 30 bzw. DN 32 können diese Anforderungen nicht erfüllen. Für Anwendungen in größeren Pufferspeichern bzw. Schichtenspeichern werden aber solche Wellrohre größeren Durchmessers, wie etwa der Nennweite DN 30 benötigt.

Es ist daher eine Aufgabe der vorliegenden Erfindung, ein Wellrohr der Nennweite DN 30 anzugeben, mit welchem die strengen Anforderungen der W/TPW 119/1 erfüllt werden können.

Die Eigenschaften eines Wellrohrs in Bezug auf Biegefestigkeit und Verhalten bei Druckstoß werden durch eine Reihe von Parametern, wie Materialwahl, Dicke des Materials, Außen- bzw. Innendurchmesser des Wellrohrs, Wellenhöhe und Wellenbreite, um nur einige zu nennen, bestimmt. Die Kombination all dieser Parameter wirkt sich in oft nicht-deterministischer Weise auf die von dem Wellrohr erreichte Stabilität und Lebensdauer aus. Insbesondere führt eine Optimierung der Parameter eines Wellrohrs für eine höhere Biegefestigkeit zu einer Verringerung dessen Lebensdauer in Bezug auf Druckstoßzyklen und umgekehrt die Optimierung für eine höhere Zahl von Druckstoßzyklen zu einer Verminderung der Biegefestigkeit des Wellrohrs.

Aus der Vielzahl möglicher Parameterkombinationen muss daher eine solche aufgefunden werden, mit der ein Wellrohr der Nennweite DN 30 die äußerst konträren Anforderungen der geforderten Prüfungen auf Biegefestigkeit und Druckstoßverhalten erfüllen kann.

Wegen der äußerst komplexen Auswirkungen, die die Veränderung eines einzelnen Parameters auf die Eigenschaften des betreffenden Wellrohrs hat, ist es nicht möglich, geeignete Parameterkombinationen durch Berechnung oder Simulation zu ermitteln. Teils ist es nicht mal möglich vorherzusagen, in welche Richtung ein bestimmter Parameter verändert werden sollte, um das Abschneiden bei einem der Tests zu verbessern. Einerseits würde man beispielsweise erwarten, dass das Verhalten bei dem Druckstoßtest durch eine höhere Steifigkeit des Wellrohrs verbessert werden kann, andererseits kann sich aber auch eine höhere Flexibilität des Wellrohrs beim Druckstoßtest vorteilhaft auswirken, da das Wellrohr den Druckstößen dann gegebenenfalls besser nachgeben und die Druckstöße somit sozusagen abfedern kann. Ganz allgemein führt einerseits eine größere Wellenhöhe, andererseits ein kürzerer Wellenabstand, bzw. eine kleinere Wellenlänge zu einer höheren Flexibilität des Wellrohrs.

Aus den genannten Gründen bleibt letztlich nur die Möglichkeit, Wellrohre mit unterschiedlichen Parameterkonstellationen experimentell auf die verlangten Eigenschaften hin zu testen, um auf diese Weise mehr oder minder zufällig eine geeignete Parameterkonstellation aufzufinden. Hierzu müssten allerdings die entsprechenden Wellrohre zunächst hergestellt werden, was aufwendig und langwierig ist, da für jede neue Wellenform, Wellenhöhe, Wellenweite, und Kombination entsprechender Durchmesser zunächst ein geeignetes Umformwerkzeug zur Umformung der Wellrohre aus Glattrohr hergestellt werden muss. Zusammen mit Rüstzeiten und Einstellung der entsprechenden Maschinen kann so bereits der Test nur einer einzigen Parameterkonstellation bzw. eines einzigen Wellrohrs mehrere Wochen in Anspruch nehmen. Bei der großen Zahl möglicher Parameterkonstellationen kann die Entwicklung eines geeigneten Wellrohrs daher leicht mehrere Jahre Entwicklungsarbeit erfordern und hohe Summen an Entwicklungskosten verschlingen.

Die vorliegende Erfindung gibt nun erstmals ein Wellrohr des Nenndurchmessers DN 30 an, für welches die geforderten Eigenschaften in Bezug auf Biegefestigkeit und Verhalten bei Druckstoß gemäß dem Regelwerk W/TPW 119/1 von April 2012 erfolgreich nachgewiesen wurden.

Die Aufgabe wird erfindungsgemäß mit einer Verwendung gemäß Anspruch 1 und mit einem trinkwassergeeigneten Pufferspeicher gemäß Anspruch 6 gelöst.

Das Wellrohr der erfindungsgemäßen Verwendung bzw. des erfindungsgemäßen Pufferspeichers ist aus vorzugsweise längsgeschweißtem Bandmaterial einer Stärke im Bereich von 0,3 mm ± 0,015 mm, vorzugsweise ± 0,005 mm, hergestellt und weist eine Wellung auf, deren Wellen einen inneren Durchmesser im Bereich von 29,5 mm ± 0,5 mm und einen äußeren Durchmesser im Bereich von 34,6 mm ± 0,5 mm haben. Vorzugsweise liegt der Innendurchmesser der Wellen im Bereich 29,5 mm ± 0,2 mm und der Außendurchmesser im Bereich 34,6 mm ± 0,2 mm.

Das Wellrohr besteht aus trinkwassergeeignetem Edelstahl, vorzugsweise Edelstahl der Bezeichnung X2 CrNiMo 17-12-2 mit der Werkstoffnummer 1.4404. Die Wellen der Wellung haben vorzugsweise einen mittleren Wellenabstand im Bereich von 5,1 mm ± 0,5 mm, vorzugsweise ± 0,2 mm.

Das Wellrohr der erfindungsgemäßen Verwendung bzw. des erfindungsgemäßen Pufferspeichers weist eine vergleichsweise flache Wellung auf, wodurch es sich besonders für Anwendungen in Wärmetauschern, Puffer- bzw. Schichtenspeichern eignet. In den oberen Wellen der Wellung eines Wellrohrs bilden sich beim Durchströmen nämlich so genannte Totwirbel, welche nur eine geringe Durchmischung mit der übrigen das Wellrohr durchströmenden Flüssigkeit erfahren, so dass der Wärmeübergang von außen auf innerhalb des Wellrohrs strömende Flüssigkeit durch eine größere Höhe der Wellung beeinträchtigt wird.

Neben den genannten Tests auf Biegefestigkeit und Verhalten bei Druckstoß erfüllt das erfindungsgemäße Wellrohr auch die Anforderungen in Bezug auf eine plastische Verformung. Hierbei darf nach einer Belastung des Wellrohrs mit einem Innendruck von 15 bar über eine Pulsdauer von einer Stunde die bleibende Längenzunahme des flexiblen Wellrohrs maximal 1 % betragen.

Weitere Merkmale, Vorteile und Eigenschaften der vorliegenden Erfindung werden im Folgenden anhand der Figuren und anhand von Ausführungsbeispielen erläutert. Dabei zeigt:
- Figur 1: eine Seitenansicht eines Wellrohrs zur Erläuterung der fraglichen Parameter und
- Figur 2: den aus der genannten Prüfvorschrift entnommenen Testaufbau für die Prüfung auf Biegefestigkeit.

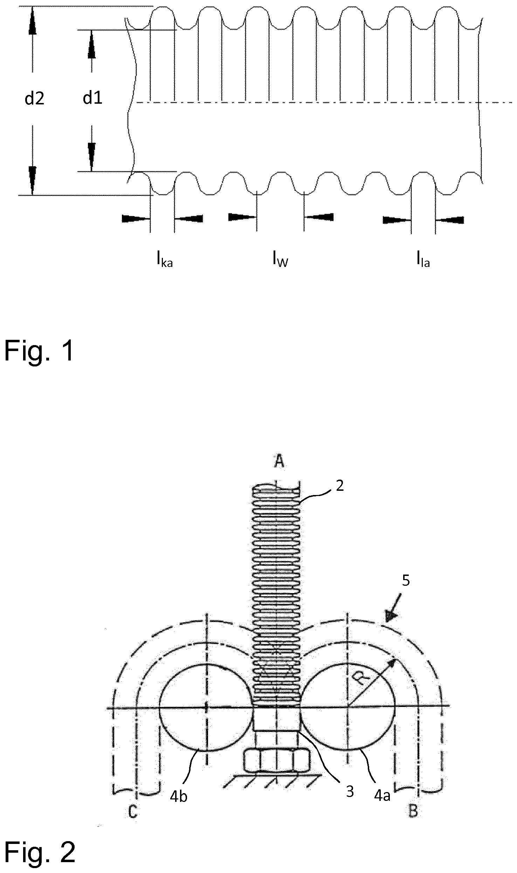

Ein beispielhaftes Wellrohr mit Ringwellung ist in Figur 1 dargestellt. Es wird aus einem dünnwandigen, längsgeschweißten Glattrohr hergestellt, in dessen Außenwandung durch Spezialwerkzeuge die charakteristische Ringwellung geformt wird, welche dem Wellrohr Flexibilität verleiht. Die Ringwellung weist eine Vielzahl paralleler Wellen gleichen Abstandes auf, deren Hauptebene senkrecht zur Achse des Wellrohrs steht. Die charakteristischen Größen des Wellrohrs sind neben der Wandstärke der Innendurchmesser d1, der Außendurchmesser d2 und der Wellenabstand l_{W}. Bei einer nicht sinusförmig verlaufenden Wellung kann der Wellenabstand l_{W} noch unterteilt werden in die Breite der Außenwellen lₖₐ und die Breite der Innenwellen lₗₐ.

Bei dem erfindungsgemäßen Wellrohr der Nennweite DN 30 beträgt der Innendurchmesser d1 = 29,5 mm ± 0,5 mm, der Außendurchmesser d2 = 34,6 mm ± 0,5 mm und der Wellenabstand l_{W} = 5,1 mm ± 0,5 mm. Daneben kann für das Wellrohr noch eine Ovalität W angegeben werden, welche sich aus der Differenz des maximalen Außendurchmessers und des minimalen Außendurchmessers ergibt und im Ausführungsbeispiel maximal 0,2 mm beträgt.

Das erfindungsgemäße Wellrohr wird aus Bandstahl der Werkstoffnummer 1.4404, Kurzname X2 CrNiMo 17-12-2 einer Stärke von 0,3 mm ± 0,015 mm hergestellt, indem aus diesem zunächst ein längsgeschweißtes Glattrohr mit einem Außendurchmesser von 34,0 mm ± 0,5 mm hergestellt wird. Aus diesem Glattrohr wird durch Umformung in an sich bekannter Weise das erfindungsgemäße Wellrohr mit den genannten Parametern erzeugt.

In Figur 2, die der eingangs zitierten Prüfvorschrift W/TPW 119/1 aus April 2012 entnommen ist, ist der Prüfaufbau zur Prüfung der Biegefestigkeit dargestellt. Das Wellrohr 2 ist mit einem Anschlussstück in Form eines Gewindestutzens 3 versehen, welcher an einem Ende fest eingespannt ist. Das Wellrohr 2 befindet sich zunächst in der geraden Position A. Für den Biegetest wird das Wellrohr 2 nun zunächst um 180° um einen Dorn 4a nach rechts in die Position B gebogen. Anschließend wird das Wellrohr 2 wieder zurück in die Position A gebogen. Aus dieser wird das Wellrohr 2 dann um 180° in die entgegengesetzte Richtung um einen Dorn 4b in die Position C gebogen, aus der es dann wieder zurück in die Ausgangsposition A zurückgebogen wird. Dieser Vorgang wird insgesamt fünf Mal wiederholt. Anschließend erfolgt eine Prüfung auf Dichtheit.

Der Dorndurchmesser der Dorne 4a, 4b beträgt das Doppelte des Außendurchmessers d2 des Wellrohrs. Der Biegeradius R, welcher zur Mittelachse des Wellrohrs gemessen wird, beträgt somit das 1,5-fache des Außendurchmessers d2. Die Längsschweißnaht des Wellrohrs 2 muss sich bei der Prüfung in der Biegeebene befinden und ist in Figur 2 durch den Pfeil 5 angedeutet.

Im Anschluss an die Prüfung auf Biegefestigkeit erfolgt die Prüfung des Verhaltens bei Druckstößen. Diese wird bei Raumtemperatur durchgeführt, wobei als Druckübertragungsmedium Wasser dient. Das Wellrohr muss insgesamt 10.000 Druckzyklen zwischen 1 und 25 bar Überdruck Stand halten, wobei die Druckstöße einen näherungsweise sinusförmigen Verlauf von 1 ± 0,5 bar Überdruck bis 25 bar Überdruck haben und etwa 30 Druckzyklen pro Minute durchgeführt werden. Anschließend erfolgt eine erneute Prüfung auf Dichtheit.

Das erfindungsgemäße Wellrohr durchläuft alle der genannten Prüfungen erfolgreich und erfüllt damit die Anforderungen der W/TPW 119/1.

## Patentansprüche

1. Verwendung eines ringgewellten Wellrohrs (2) aus trinkwassergeeignetem Edelstahl zum Einbau in eine Trinkwasserinstallation zur Wärmeübertragung, insbesondere einen Schichtenspeicher,
**dadurch gekennzeichnet, dass**
das Wellrohr (2) eine Wellung aufweist, deren Wellen einen inneren Durchmesser (d1) im Bereich von 29,5 mm ± 0,5 mm, vorzugsweise ± 0,2 mm, und einen äußeren Durchmesser (d2) im Bereich von 34,6 mm ± 0,5 mm, vorzugsweise ± 0,2 mm, haben.

2. Verwendung eines ringgewellten Wellrohrs (2) nach Anspruch 1, bei dem die Wellen der Wellung einen mittleren Wellenabstand (lw) im Bereich von 5,1 mm ± 0,5 mm, vorzugsweise ± 0,2 mm, haben.

3. Verwendung eines ringgewellten Wellrohrs (2) nach Anspruch 1 oder 2, welches aus Bandstahl einer Stärke im Bereich von 0,3 mm ± 0,015 mm, vorzugsweise ± 0,005 mm, hergestellt ist.

4. Verwendung eines ringgewellten Wellrohrs (2) nach einem der vorangehenden Ansprüche, welches aus Edelstahl der Werkstoffnummer 1.4404 besteht.

5. Verwendung eines ringgewellten Wellrohrs (2) nach einem der vorangehenden Ansprüche, welches aus einem längsgeschweißtem Glattrohr hergestellt ist.

6. Trinkwassergeeigneter Pufferspeicher, insbesondere Schichtenspeicher, mit mindestens einem trinkwasserführenden ringgewellten Wellrohr (2) aus trinkwassergeeignetem Edelstahl,
**dadurch gekennzeichnet, dass**
das Wellrohr (2) eine Wellung aufweist, deren Wellen einen inneren Durchmesser (d1) im Bereich von 29,5 mm ± 0,5 mm, vorzugsweise ± 0,2 mm, und einen äußeren Durchmesser (d2) im Bereich von 34,6 mm ± 0,5 mm, vorzugsweise ± 0,2 mm, haben.

## Claims

1. Use of an annularly corrugated pipe (2) made from high-grade steel suitable for drinking water, for incorporation into a drinking water installation for heat transfer, especially a stratified storage device,
**characterised in that**
the corrugated pipe (2) has corrugation the corrugations of which have an internal diameter (d1) in the region of 29.5 mm ± 0.5 mm, preferably ± 0.2 mm, and an external diameter (d2) in the region of 34.6 mm ± 0.5 mm, preferably ± 0.2 mm.

2. Use of an annularly corrugated pipe (2) according to claim 1, wherein the corrugations of the corrugation have a mean corrugation spacing (l_{W}) in the region of 5.1 mm ± 0.5 mm, preferably ± 0.2 mm.

3. Use of an annularly corrugated pipe (2) according to claim 1 or 2, which has been produced from strip steel of a thickness in the region of 0.3 mm ± 0.015 mm, preferably ± 0.005 mm.

4. Use of an annularly corrugated pipe (2) according to any one of the preceding claims, which consists of high-grade steel of material number 1.4404.

5. Use of an annularly corrugated pipe (2) according to any one of the preceding claims, which has been produced from a longitudinally welded plain tube.

6. Buffer storage device suitable for drinking water, especially a stratified storage device, having at least one annularly corrugated pipe (2) that conducts drinking water, which pipe is made from high-grade steel suitable for drinking water,
**characterised in that**
the corrugated pipe (2) has corrugation the corrugations of which have an internal diameter (d1) in the region of 29.5 mm ± 0.5 mm, preferably ± 0.2 mm, and an external diameter (d2) in the region of 34.6 mm ± 0.5 mm, preferably ± 0.2 mm.

## Revendications

1. Utilisation d'un tube ondulé (2) à ondes annulaires, en acier inoxydable convenant pour l'eau potable, pour le montage dans une installation d'eau potable à des fins de transmission de chaleur, en particulier un accumulateur à stratification,
**caractérisée en ce que** le tube ondulé (2) présente une ondulation dont les ondes possèdent un diamètre intérieur (d1) dans la plage de 29,5 mm ± 0,5 mm, de préférence ± 0,2 mm, et un diamètre extérieur (d2) dans la plage de 34,6 mm ± 0,5 mm, de préférence ± 0,2 mm.

2. Utilisation d'un tube ondulé (2) à ondes annulaires selon la revendication 1, selon laquelle les ondes de l'ondulation possèdent une distance moyenne (l_{w}) entre ondes dans la plage de 5,1 mm ± 0,5 mm, de préférence ± 0,2 mm.

3. Utilisation d'un tube ondulé (2) à ondes annulaires selon la revendication 1 ou 2, qui est fabriqué en feuillard d'acier d'une épaisseur dans la plage de 0,3 mm ± 0,015 mm, de préférence ± 0,005 mm.

4. Utilisation d'un tube ondulé (2) à ondes annulaires selon l'une des revendications précédentes, qui est constitué d'acier inoxydable de numéro de matériau 1.4404.

5. Utilisation d'un tube ondulé (2) à ondes annulaires selon l'une des revendications précédentes, qui est fabriqué à partir d'un tube lisse soudé longitudinalement.

6. Accumulateur tampon convenant pour l'eau potable, en particulier accumulateur à stratification, avec au moins un tube ondulé (2) à ondes annulaires conduisant l'eau potable, en acier inoxydable convenant pour l'eau potable,
**caractérisé en ce que** le tube ondulé (2) présente une ondulation dont les ondes possèdent un diamètre intérieur (d1) dans la plage de 29,5 mm ± 0,5 mm, de préférence ± 0,2 mm, et un diamètre extérieur (d2) dans la plage de 34,6 mm ± 0,5 mm, de préférence ± 0,2 mm.
